# EUROPEAN PATENT SPECIFICATION

(11) **EP 4 173 999 B1**
(45) Date of publication and mention of the grant of the patent: **22.01.2025**
(21) Application number: 22204026.3
(22) Date of filing: 27.10.2022
(51) Int. Cl.: B65G 21/20

(54) **SYSTEM FOR CONVEYING PRODUCTS**
EINRICHTUNG ZUM FÖRDERN VON PRODUKTEN
SYSTÈME DE TRANSPORT DE PRODUITS

(30) Priority: 02.11.2021 NL 2029587
(43) Date of publication of application: 03.05.2023
(73) Proprietor: Vanderlande Industries B.V., 5466 RB Veghel (NL)
(72) Inventor: VAN DIJK, Rudolf, VEGHEL (NL); VERVOORT, Petrus Theodorus Cornelis, VEGHEL (NL); VAN ROOSMALEN, Sander Bernard Wilhelmus, VEGHEL (NL); HENDRIKS, Kasper Jan Henk, VEGHEL (NL); VAN DORST, Maikel Theodorus Petrus Willebrordus, VEGHEL (NL)
(74) Representative: Algemeen Octrooi- en Merkenbureau B.V.

(56) References cited:
- EP-A1- 3 647 240
- WO-A1-2021/113594

## Description

The present invention relates to a system and a method for conveying products.

A known system for conveying products has a conveyor with which products are moved in a conveying direction. The known system also has a supply conveyor which connects at a supply location to the conveyor with which products are moved in a supply direction and are transferred to the conveyor. A control device ensures that in use, a product is transferred from the supply conveyor to a predetermined position on the conveyor. An example of a known system of this kind is disclosed in US 3,747,781. WO 2021/113594 A1 discloses a system for conveying products according to the preamble of claim 1.

One objective of the present invention is to provide a system for conveying products that is suitable for application with a large variety of products. Another objective of the invention is to provide a system for conveying products, with an increased capacity. Another objective of the invention is to provide a system for conveying products, with increased reliability.

One or more of said objectives are achieved with the system according to the invention, for conveying products, comprising
- a conveyor with a carrying surface for the products and with a drive device for moving products, located on the carrying surface, in a conveying direction;
- a supply conveyor that is connected to the conveyor at a supply location, with a supplying carrying surface for products and with a supply drive device for moving products located on the supplying carrying surface in a supply direction and transferring these products to the conveyor;
- a control device that is configured for controlling, in operation, the supply drive device in such a way relative to the drive device that a product is transferred from the supply conveyor to a predetermined position on the conveyor;
wherein the supply conveyor comprises a positioning portion and the supply drive device is configured to speed up or to slow down a product at the location of the positioning portion in order to ensure that the product, on being transferred from the supply conveyor to the conveyor, moves to the predetermined position on the conveyor; wherein the system further comprises:
- a blowing device, configured for generating, in operation, under the influence of the control device, an air stream from above the supplying carrying surface in the direction of the supplying carrying surface at the location of the positioning portion, for forcing, in operation, products against the supplying carrying surface.

One effect of the system according to the invention is that through application of said blowing device even relatively light products, for example such as letterbox packets including products in envelopes, can be conveyed effectively with the system and can be transferred with the supply conveyor to the conveyor. Because the products are forced against the supplying carrying surface by the air stream, in operation the products, in particular relatively light products, during said acceleration or deceleration, will not or will at least to a considerably smaller extent have a tendency to slide relative to the accelerating or decelerating supplying carrying surface thereunder, or even, under the influence of air resistance, come away from the supplying carrying surface and possibly even land up next to the supply conveyor. Light products of this kind can thus be conveyed effectively with the system by employing said blowing device. The system according to the invention is therefore suitable for a large variety of products, in particular also relatively light products. Owing to said blowing device, the reliability of the system also increases, since any undesirable sliding of a product relative to the accelerating or decelerating supplying carrying surface thereunder makes it more difficult or even impossible to allow the product to move to a predetermined position on the conveyor. Application of said blowing device also makes it possible to increase the capacity of the system. This is possible because a conveying speed of products on the conveyor and on the supply conveyor can be increased since owing to the blowing device, as explained, products do not have or at least have to a considerably smaller extent a tendency to slide relative to the accelerating or decelerating supplying carrying surface thereunder so that even at an increased speed, reliable transfer of products can be achieved.

In one embodiment the conveyor may be a sorting conveyor, for example such as a transverse-belt conveyor or a tilt-tray conveyor or possibly also a conveyor wherein products are pushed with pushing shoes in the transverse direction of the conveyor.

In one embodiment the blowing device comprises two successive blowing units in the supply direction. The blowing device, and if using said two blowing units each of the blowing units, is in one embodiment configured to generate an air stream that extends over a width of the positioning portion. "A width" means a width of the supplying carrying surface, in a transverse direction transverse to the supply conveying direction, of the supply conveyor. Application of two successive blowing units increases a length of the supply conveyor, more particularly of the positioning portion, on which the products are, in operation, subjected to the air stream, and therefore further increases the reliability of the system.

In one embodiment the blowing device is configured to generate the air stream in such a way that this also is directed in the supply direction. By thus directing the air stream slanting forwards and downwards, products are to an even greater extent subjected effectively to the air stream and products can, in particular when accelerating, be subjected to greater acceleration. One angle of the air stream is in one embodiment located at an acute angle in the range from 10 to 45 degrees, preferably from 20 to 30 degrees, to the supplying carrying surface, seen in side view of the supply conveyor. Said angle relates to a main direction of the air stream, i.e. the average angle. The air stream itself may extend/fan out over a range of angle.

In one embodiment the blowing device is configured to generate the air stream with an air speed component in the supply direction that is at least roughly equal to a speed of movement of products on the conveyor. Therefore the products are subjected to the air stream very effectively and coordinated with the speed of movement of the conveyor.

In one embodiment the control device is configured to control the blowing device in such a way that in operation the blowing device generates the air stream only during acceleration and deceleration of a product, preferably only during acceleration. Only generating the air stream at said times lowers the energy consumption of the system.

In one embodiment the system further comprises a transfer portion between the positioning portion and the conveyor, said transfer portion being arranged in such a way that at the location of the transfer portion the supply direction, seen in top view, makes an acute angle with the conveying direction. Therefore products are already partly transferred to the conveyor in the desired conveying direction. Said acute angle may in one embodiment be in the range from 15 to 45 degrees, preferably from 20 to 35 degrees.

In one embodiment the supply drive device is configured such that a speed of movement of products in the supply direction on the transfer portion is at least substantially equal to a speed of movement of products in the conveying direction on the conveyor. This leads to a controlled and therefore reliable transfer of products from the supply conveyor to the conveyor.

The invention also relates to a method for conveying products, making use of a system as described above according to the present invention. The method comprises:
a) with the conveyor, moving products located on the carrying surface in the conveying direction, and with the supply conveyor, moving products located on the supplying carrying surface in a supply direction;
b) with the control device, controlling the supply drive device in such a way relative to the drive device that a product is transferred from the supply conveyor to a predetermined position on the conveyor, for which the supply drive device is configured to speed up or to slow down a product at the location of the positioning portion in order to ensure that the product, on being transferred from the supply conveyor to the conveyor, moves to the predetermined position on the conveyor;
wherein the method further comprises:
c) for the purpose of step b), generating with the blowing device, under the influence of the control device, an air stream from above the supplying carrying surface in the direction of the supplying carrying surface at the location of the positioning portion, so that products are forced against the supplying carrying surface.

Effects of the method according to the invention are similar to effects of the system according to the invention described above. Embodiments of the system according to the invention are similar in application to the method according to the invention, and vice versa.

In one embodiment, during step c), with the blowing device, the air stream is generated with an air speed component in the supply direction that is at least roughly equal to a speed of movement of products on the conveyor. Therefore the products are subjected to the air stream very effectively and coordinated with the speed of movement of the conveyor.

In one embodiment, for the purpose of step c) the control device controls the blowing device in such a way that the blowing device generates the air stream only during acceleration and deceleration of a product, preferably only during acceleration. Only generating the air stream at said times lowers the energy consumption of the system.

The present invention will be explained hereunder on the basis of the description of preferred embodiments of a system and method according to the invention, referring to the following figures.
Fig. 1 shows a system according to the invention in three-dimensional representation; and
Fig. 2 shows a supply conveyor of the system according to Fig. 1 in side view.

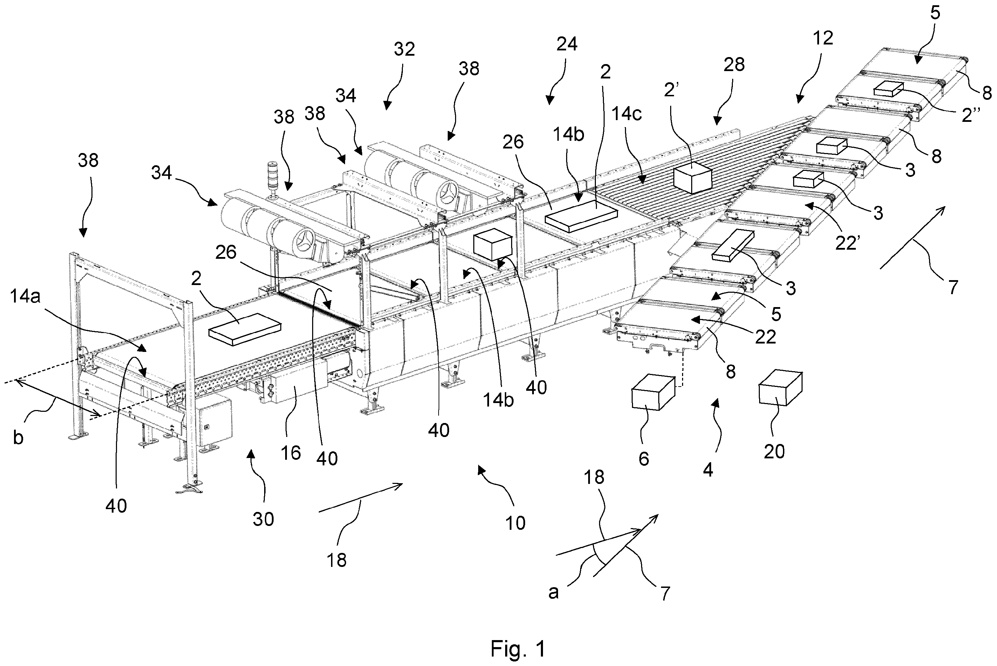

The figures show a system 1 for conveying products 2, 3. For this purpose the system 1 comprises a conveyor 4, being, in the example shown in Fig. 1, a transverse-belt conveyor, which has successive, driven transverse belts 8 with which products can be sorted at the location of sorting locations, not shown further in the figures, by moving products off of the conveyor in the transverse direction by activating a drive of a transverse belt at the location of a sorting location. The conveyor 4 is actually only shown partly in Fig. 1 and is in practice endless. The conveyor has a carrying surface 5 for the products 2, 3 and a drive device 6 (shown very schematically) for moving products 2, 3 located on the carrying surface 5 in a conveying direction 7.

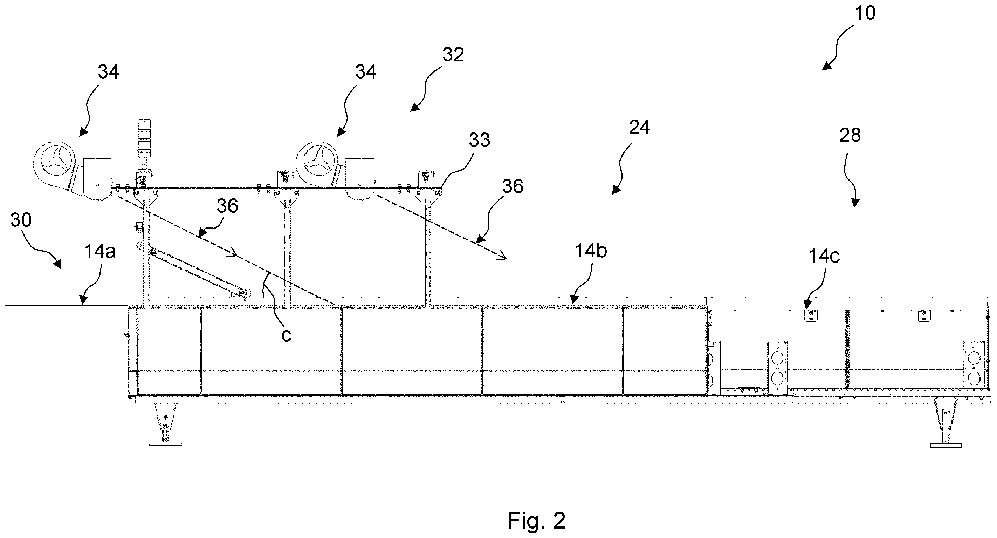

The system 1 also has a supply conveyor 10, which connects to the conveyor 4 at a supply location 12. The supply conveyor has a supplying carrying surface 14a, 14b, 14c for products 2 and a supply drive device 16 for moving in a supply direction 18 products 2 located on the supplying carrying surface 14a-c and transferring these products 2 to the conveyor 4. The supply conveyor 10 has an upstream belt conveyor 30, which has a part 14a of the supplying carrying surface, for supplying products 2 to a positioning portion 24, to be defined in more detail hereunder. The belt conveyor 30 is only shown very schematically in Fig. 2. The supply conveyor 10 also has a transfer portion 28, which has a part 14c of the supplying carrying surface, between the positioning portion 24 and the conveyor 4. The transfer portion 28 is arranged in such a way that at the location of the transfer portion 28, the supply direction, seen in top view, makes an acute angle "a" with the conveying direction 7. The supply drive device 16 may be configured so that a speed of movement of products 2 in the supply direction 18 on the transfer portion 28 is at least substantially equal to a speed of movement of products 2, 3 in the conveying direction 7 on the conveyor 4.

The system 1 has a control device 20 (shown very schematically and in practice connected actively, such as wired or wireless, to the conveyor and the supply conveyor), said control device 20 being configured to control the supply drive device 16 in operation in such a way relative to the drive device 6 that a product 2 is transferred from the supply conveyor 10 at a predetermined position 22, 22' onto the conveyor 4. This position may, as shown in Fig. 1 for position 22', be an empty position on the conveyor 4 between two products 3 already present on the conveyor. The product indicated with reference number 2" in Fig. 1 is transferred earlier from the supply conveyor 10 to the conveyor 4. Position information like this can be stored in the control device or may be passed on to the control device by a high-level system controller. The position of each product on the conveyor and the desired position of a product to be transferred to the conveyor may be known and available via the control device. The position of products on the supply conveyor 10 may be known and may for example be observed by a detector such as a camera connected to the control device.

For the purpose of transferring a product 2 on the supply conveyor 10 at a predetermined position 22, 22' onto the conveyor 4, the supply conveyor 10 has a positioning portion 24. The positioning portion 24 has, at least in the example shown in the figures, four successive conveyor belts 26 drivable independently of each other. The supply drive device 16 is configured to speed up or to slow down a product 2 at the location of the positioning portion 24 in order to ensure that on transfer from the supply conveyor 10 to the conveyor 4, the product 2 moves onto the conveyor 4 at the predetermined position 22. For this purpose, the product indicated with reference number 2' is for example already accelerated by means of one or more of the conveyor belts 26 so that the product 2' is transferred to position 22'. The product 2 located on belt conveyor 30 must for example still be accelerated at the positioning portion 24 to be able to arrive correctly at position 22 on the conveyor 4.

Although determination of the position of a product on the supply conveyor may take place in various ways, including for example with a vision system, i.e. with a camera system, a vertical photocell unit 38 is employed in the example shown in the figures. A vertical photocell unit refers to a horizontal row of transmitterreceiver photocells that are active vertically and, in the present example, are directed vertically downward through a gap 40 between two successive conveyors and an opposing unit is provided. The horizontal row of photocells preferably extends over the whole width of the supply conveyor 10 so that even products that are located completely on one side on the supplying carrying surface can be observed. The output signal of the photocell unit is then only "on" (with no interruption of the light beams at all) or "off" (one or more of the light beams are interrupted). These photocell units are also suitable for detecting low products. These low products are generally also relatively light products, which, as described, are forced by the blowing device in an effective manner against the supplying carrying surface, thus significantly reducing the chance of undesirable displacement or even coming away.

In this way, position information of products on the supply conveyor can thus be observed and be passed on to the control device 20 so that, based thereon, for example one or more of the conveyor belts 26 of the positioning portion 24 may be driven in such a way that this accelerates a product so that it is moved onto the conveyor 4 at a desired position.

The system 1 further comprises a blowing device 32, which is configured for generating, in operation, under the influence of the control device 20, an air stream from above the supplying carrying surface 14b in the direction of the supplying carrying surface 14b at the location of the positioning portion 24, for forcing, in operation, products 2 against the supplying carrying surface 14b. At least in the example shown, the blowing device 32 has two successive blowing units 34 in the supply direction 18, each configured to generate an air stream 36 that extends over a width b of the positioning portion 24. The blowing units are provided on a frame 33 above the supplying carrying surface 14a, 14b. The blowing device 32 is configured to generate the air stream 36 in such a way that this also is directed in the supply direction 18, at least in the example shown in the figures at an acute angle c of about 25 degrees to the supplying carrying surface 14b, seen in side view of the supply conveyor 10. In Fig. 2, the air streams 36 are only indicated by means of the dashed arrows shown, which represent the main air stream. In practice, the air streams 36 will fan out. The blowing device 32 is configured to generate the air stream 36 with an air speed component in the supply direction 18 that is at least roughly equal to a speed of movement of products on the conveyor 4. It is advantageous in this case if the control device 20 is configured to control the blowing device in such a way that the blowing device only generates the air stream in operation during acceleration and deceleration of a product, preferably only during acceleration.

The system 1 as described above is used in a method for conveying products 2, 3. The method comprises the moving of products 2, 3, located on the carrying surface 5, with the conveyor 4 in the conveying direction 7, and the moving of products, located on the supplying carrying surface 14a-c, with the supply conveyor 10 in a supply direction 18. The control device 20 controls the supply drive device 16 in such a way relative to the drive device 6 that a product 2 is transferred from the supply conveyor 10 at a predetermined position 22, 22' onto the conveyor 4, for which the supply drive device 16 is configured to speed up or to slow down a product 2 at the location of the positioning portion 24 in order to ensure that the product 2 on transfer from the supply conveyor 10 to the conveyor 4 moves over onto the conveyor 4 at the predetermined position 22, 22'.

The method further comprises generating, with the blowing device 32, under the influence of the control device 20, an air stream 36 from above the supplying carrying surface 14b in the direction of the supplying carrying surface 14b at the location of the positioning portion 24, so that products 2 are forced against the supplying carrying surface 14b.

With the blowing device 32, the air stream 36 can be generated with an air speed component in the supply direction 18 that is at least roughly equal to a speed of movement of products 3 on the conveyor 4. The control device 20 can control the blowing device 32 in such a way that the blowing device 32 generates the air stream only during acceleration and deceleration of a product, preferably only during acceleration.

## Claims

1. System (1) for conveying products (2, 3), comprising
- a conveyor (4) with a carrying surface (5) for the products (2, 3) and with a drive device (6) for moving products (2, 3), located on the carrying surface (5), in a conveying direction (7);
- a supply conveyor (10) that is connected to the conveyor (4) at a supply location (12), with a supplying carrying surface (14a-c) for products (2) and with a supply drive device (16) for moving products located on the supplying carrying surface (14a-c) in a supply direction (18) and transferring these products to the conveyor (4);
- a control device (20) that is configured for controlling, in operation, the supply drive device (16) in such a way relative to the drive device (6) that a product (2) is transferred from the supply conveyor (10) to a predetermined position (22, 22') on the conveyor (4);
wherein the supply conveyor (10) comprises a positioning portion (24) and the supply drive device (16) is configured to speed up or to slow down a product (2) at the location of the positioning portion (24) in order to ensure that the product (2), on being transferred from the supply conveyor (10) to the conveyor (4), moves to the predetermined position on the conveyor (4);
**characterized by:**
- a blowing device (32), configured for generating, in operation, under the influence of the control device (20), an air stream (36) from above the supplying carrying surface (14b) in the direction of the supplying carrying surface (14b) at the location of the positioning portion (24), for forcing, in operation, products (2) against the supplying carrying surface (14b).

2. System according to claim 1, wherein the blowing device (32) comprises two successive blowing units (34) in the supply direction (18), each preferably configured to generate an air stream (36) that extends over a width (b) of the positioning portion (24).

3. System according to claim 1 or 2, wherein the blowing device (32) is configured to generate the air stream (36) in such a way that this also is directed in the supply direction (18), preferably at an acute angle (c) in the range from 10 to 45 degrees, preferably from 20 to 30 degrees, to the supplying carrying surface (14b), seen in side view of the supply conveyor (10).

4. System according to one of the preceding claims, wherein the blowing device (32) is configured to generate the air stream (36) with an air speed component in the supply direction (18) that is at least roughly equal to a speed of movement of products on the conveyor (4).

5. System according to one of the preceding claims, wherein the control device (20) is configured to control the blowing device (32) in such a way that in operation the blowing device (32) only generates the air stream (36) during acceleration and deceleration of a product, preferably only during acceleration.

6. System according to one of the preceding claims, further comprising a transfer portion (28) between the positioning portion (24) and the conveyor (4), said transfer portion (28) being arranged in such a way that at the location of the transfer portion (28), the supply direction (18), seen in top view, makes an acute angle (a) with the conveying direction (7).

7. System according to claim 6, wherein the supply drive device (16) is configured such that a speed of movement of products (2) in the supply direction (18) on the transfer portion (28) is at least substantially equal to a speed of movement of products (2, 3) in the conveying direction (7) on the conveyor (4).

8. Method for conveying products (2, 3), making use of a system (1) according to one of the preceding claims, comprising
a) with the conveyor (4), moving products (2) located on the carrying surface (5) in the conveying direction (7), and with the supply conveyor (10), moving products located on the supplying carrying surface (14a-c) in a supply direction (18);
b) with the control device (20), controlling the supply drive device (16) in such a way relative to the drive device (6) that a product is transferred from the supply conveyor (10) to a predetermined position on the conveyor (4), for which the supply drive device (16) is configured to speed up or to slow down a product (2) at the location of the positioning portion (24) in order to ensure that the product (2), on being transferred from the supply conveyor (10) to the conveyor (4), moves to the predetermined position on the conveyor (4);
c) for the purpose of step b), generating with the blowing device (32), under the influence of the control device (20), an air stream (36) from above the supplying carrying surface (14b) in the direction of the supplying carrying surface (14b) at the location of the positioning portion (24), so that products (2) are forced against the supplying carrying surface (14b).

9. Method according to claim 8, wherein during step c), the air stream (36) is generated with the blowing device (32) with an air speed component in the supply direction (18) that is at least roughly equal to a speed of movement of products on the conveyor (4).

10. Method according to claim 8 or 9, wherein for the purpose of step c), the control device (20) controls the blowing device (32) in such a way that the blowing device (32) generates the air stream (36) only during acceleration and deceleration of a product (2), preferably only during acceleration.

## Patentansprüche

1. System (1) zum Fördern von Produkten (2, 3), umfassend:
- einen Förderer (4) mit einer Transportfläche (5) für die Produkte (2, 3) und mit einer Antriebsvorrichtung (6) zum Bewegen von Produkten (2, 3), die sich auf der Transportfläche (5) befinden, in einer Förderrichtung (7);
- einen Zufuhrförderer (10), der an einer Zufuhrstelle (12) mit dem Förderer (4) verbunden ist, mit einer Zufuhrtransportfläche (14a-c) für Produkte (2) und mit einer Zufuhrantriebsvorrichtung (16) zum Bewegen von Produkten, die sich auf der Zufuhrtransportfläche (14a-c) befinden, in einer Zufuhrrichtung (18) und zum Überführen dieser Produkte auf den Förderer (4);
- eine Steuervorrichtung (20), die dazu ausgelegt ist, im Betrieb die Zufuhrantriebsvorrichtung (16) relativ zu der Antriebsvorrichtung (6) derart zu steuern, dass ein Produkt (2) von dem Zufuhrförderer (10) in eine vorbestimmte Position (22, 22') auf dem Förderer (4) überführt wird;
wobei der Zufuhrförderer (10) einen Positionierungsabschnitt (24) umfasst und die Zufuhrantriebsvorrichtung (16) dazu ausgelegt ist, ein Produkt (2) an der Stelle des Positionierungsabschnitts (24) zu beschleunigen oder zu verlangsamen, um sicherzustellen, dass das Produkt (2) beim Überführen von dem Zufuhrförderer (10) auf den Förderer (4) in die vorbestimmte Position auf dem Förderer (4) bewegt wird;
**gekennzeichnet durch**:
- eine Blasvorrichtung (32), die dazu ausgelegt ist, im Betrieb unter dem Einfluss der Steuervorrichtung (20) einen Luftstrom (36) von oberhalb der Zufuhrtransportfläche (14b) in Richtung der Zufuhrtransportfläche (14b) an der Stelle des Positionierungsabschnitts (24) zu erzeugen, um im Betrieb Produkte (2) gegen die Zufuhrtransportfläche (14b) zu drücken.

2. System nach Anspruch 1, wobei die Blasvorrichtung (32) zwei in Zufuhrrichtung (18) aufeinanderfolgende Blaseinheiten (34) umfasst, wobei jede vorzugsweise dazu ausgelegt ist, einen Luftstrom (36) zu erzeugen, der sich über eine Breite (b) des Positionierungsabschnitts (24) erstreckt.

3. System nach Anspruch 1 oder 2, wobei die Blasvorrichtung (32) dazu ausgelegt ist, den Luftstrom (36) derart zu erzeugen, dass dieser in Seitenansicht des Zufuhrförderers (10) gesehen ebenfalls in die Zufuhrrichtung (18), vorzugsweise unter einem spitzen Winkel (c) im Bereich von 10 bis 45 Grad, vorzugsweise von 20 bis 30 Grad zur Zufuhrtransportfläche (14b) gerichtet ist.

4. System nach einem der vorhergehenden Ansprüche, wobei die Blasvorrichtung (32) dazu ausgelegt ist, den Luftstrom (36) mit einer Luftgeschwindigkeitskomponente in der Zufuhrrichtung (18) zu erzeugen, die zumindest annähernd gleich einer Bewegungsgeschwindigkeit von Produkten auf dem Förderer (4) ist.

5. System nach einem der vorhergehenden Ansprüche, wobei die Steuervorrichtung (20) dazu ausgelegt ist, die Blasvorrichtung (32) derart zu steuern, dass im Betrieb die Blasvorrichtung (32) den Luftstrom (36) nur während der Beschleunigung und Verlangsamung, vorzugsweise nur während der Beschleunigung, eines Produkts erzeugt.

6. System nach einem der vorhergehenden Ansprüche, ferner umfassend einen Überführungsabschnitt (28) zwischen dem Positionierungsabschnitt (24) und dem Förderer (4), wobei der Überführungsabschnitt (28) derart angeordnet ist, dass an der Stelle des Überführungsabschnitts (28) die Zufuhrrichtung (18), in Draufsicht gesehen, einen spitzen Winkel (a) mit der Förderrichtung (7) bildet.

7. System nach Anspruch 6, wobei die Zufuhrantriebsvorrichtung (16) derart ausgelegt ist, dass eine Bewegungsgeschwindigkeit von Produkten (2) in Zufuhrrichtung (18) auf dem Überführungsabschnitt (28) zumindest im Wesentlichen gleich einer Bewegungsgeschwindigkeit von Produkten (2, 3) in Förderrichtung (7) auf dem Förderer (4) ist.

8. Verfahren zum Fördern von Produkten (2, 3) unter Verwendung eines Systems (1) nach einem der vorhergehenden Ansprüche, umfassend:
a) mit dem Förderer (4) Bewegen von Produkten (2), die sich auf der Transportfläche (5) befinden, in der Förderrichtung (7), und mit dem Zufuhrförderer (10) Bewegen von Produkten, die sich auf der Zufuhrtransportfläche (14a-c) befinden, in einer Zufuhrrichtung (18);
b) mit der Steuervorrichtung (20) Steuern der Zufuhrantriebsvorrichtung (16) relativ zu der Antriebsvorrichtung (6) derart, dass ein Produkt von dem Zufuhrförderer (10) in eine vorbestimmte Position auf dem Förderer (4) überführt wird, wofür die Zufuhrantriebsvorrichtung (16) dazu ausgelegt ist, ein Produkt (2) an der Stelle des Positionierungsabschnitts (24) zu beschleunigen oder zu verlangsamen, um sicherzustellen, dass das Produkt (2) beim Überführen von dem Zufuhrförderer (10) auf den Förderer (4) in die vorbestimmte Position auf dem Förderer (4) bewegt wird;
c) zum Zweck des Schritts b) Erzeugen mit der Blasvorrichtung (32) unter dem Einfluss der Steuervorrichtung (20) eines Luftstroms (36) von oberhalb der Zufuhrtransportfläche (14b) in Richtung der Zufuhrtransportfläche (14b) an der Stelle des Positionierungsabschnitts (24), sodass Produkte (2) gegen die Zufuhrtransportfläche (14b) gedrückt werden.

9. Verfahren nach Anspruch 8, wobei während des Schritts c) der Luftstrom (36) mit der Blasvorrichtung (32) mit einer Luftgeschwindigkeitskomponente in der Zufuhrrichtung (18) erzeugt wird, die zumindest annähernd gleich einer Bewegungsgeschwindigkeit von Produkten auf dem Förderer (4) ist.

10. Verfahren nach Anspruch 8 oder 9, wobei zum Zweck des Schritts c) die Steuervorrichtung (20) die Blasvorrichtung (32) derart steuert, dass die Blasvorrichtung (32) den Luftstrom (36) nur während der Beschleunigung und Verlangsamung eines Produkts (2), vorzugsweise nur während der Beschleunigung, erzeugt.

## Revendications

1. Système (1) de transport de produits (2, 3), comprenant
- un transporteur (4) avec une surface porteuse (5) pour les produits (2, 3) et avec un dispositif d'entraînement (6) pour déplacer les produits (2, 3), situés sur la surface porteuse (5), dans une direction de transport (7) ;
- un transporteur d'alimentation (10) qui est relié au transporteur (4) à un emplacement d'alimentation (12), avec une surface porteuse d'alimentation (14a-c) pour les produits (2) et avec un dispositif d'entraînement d'alimentation (16) pour déplacer les produits situés sur la surface porteuse d'alimentation (14a-c) dans une direction d'alimentation (18) et transférer ces produits au transporteur (4) ;
- un dispositif de commande (20) qui est configuré pour commander, lors du fonctionnement, le dispositif d'entraînement d'alimentation (16) de telle manière, par rapport au dispositif d'entraînement (6), qu'un produit (2) soit transféré du transporteur d'alimentation (10) à une position prédéterminée (22, 22') sur le transporteur (4) ;
dans lequel le transporteur d'alimentation (10) comprend une partie de positionnement (24) et le dispositif d'entraînement d'alimentation (16) est configuré pour accélérer ou ralentir un produit (2) à l'emplacement de la partie de positionnement (24) afin de garantir que le produit (2), lors de son transfert du transporteur d'alimentation (10) au transporteur (4), se déplace vers la position prédéterminée sur le transporteur (4) ;
**caractérisé par :**
- un dispositif de soufflage (32), configuré pour générer, lors du fonctionnement, sous l'influence du dispositif de commande (20), un flux d'air (36) depuis le dessus de la surface porteuse d'alimentation (14b) en direction de la surface porteuse d'alimentation (14b) à l'emplacement de la partie de positionnement (24), pour forcer, lors du fonctionnement, les produits (2) contre la surface porteuse d'alimentation (14b).

2. Système selon la revendication 1, dans lequel le dispositif de soufflage (32) comprend deux unités de soufflage (34) successives dans la direction d'alimentation (18), chacune étant de préférence configurée pour générer un flux d'air (36) qui s'étend sur une largeur (b) de la partie de positionnement (24).

3. Système selon la revendication 1 ou 2, dans lequel le dispositif de soufflage (32) est configuré pour générer le flux d'air (36) de telle manière que celui-ci soit également dirigé dans la direction d'alimentation (18), de préférence à un angle aigu (c) dans la plage allant de 10 à 45 degrés, de préférence de 20 à 30 degrés, par rapport à la surface porteuse d'alimentation (14b), vue en vue latérale du transporteur d'alimentation (10).

4. Système selon l'une des revendications précédentes, dans lequel le dispositif de soufflage (32) est configuré pour générer le flux d'air (36) avec une composante de vitesse d'air dans la direction d'alimentation (18) qui est au moins à peu près égale à une vitesse de déplacement des produits sur le transporteur (4).

5. Système selon l'une des revendications précédentes, dans lequel le dispositif de commande (20) est configuré pour commander le dispositif de soufflage (32) de telle manière que, lors du fonctionnement, le dispositif de soufflage (32) ne génère le flux d'air (36) que pendant l'accélération et la décélération d'un produit, de préférence uniquement pendant l'accélération.

6. Système selon l'une des revendications précédentes, comprenant en outre une partie de transfert (28) entre la partie de positionnement (24) et le transporteur (4), ladite partie de transfert (28) étant agencée de telle manière qu'à l'emplacement de la partie de transfert (28), la direction d'alimentation (18), vue en vue de dessus, forme un angle aigu (a) avec la direction de transport (7).

7. Système selon la revendication 6, dans lequel le dispositif d'entraînement d'alimentation (16) est configuré de telle manière qu'une vitesse de déplacement des produits (2) dans la direction d'alimentation (18) sur la partie de transfert (28) soit au moins sensiblement égale à une vitesse de déplacement des produits (2, 3) dans la direction de transport (7) sur le transporteur (4).

8. Procédé de transport de produits (2, 3), utilisant un système (1) selon l'une des revendications précédentes, comprenant
a) avec le transporteur (4), le déplacement des produits (2) situés sur la surface porteuse (5) dans la direction de transport (7), et avec le transporteur d'alimentation (10), le déplacement des produits situés sur la surface porteuse d'alimentation (14a-c) dans une direction d'alimentation (18) ;
b) avec le dispositif de commande (20), la commande du dispositif d'entraînement d'alimentation (16) de telle manière, par rapport au dispositif d'entraînement (6), qu'un produit soit transféré du transporteur d'alimentation (10) vers une position prédéterminée sur le transporteur (4), pour laquelle le dispositif d'entraînement d'alimentation (16) est configuré pour accélérer ou pour ralentir un produit (2) à l'emplacement de la partie de positionnement (24) afin de garantir que le produit (2), lors de son transfert du transporteur d'alimentation (10) au transporteur (4), se déplace vers la position prédéterminée sur le transporteur (4) ;
c) aux fins de l'étape b), la génération avec le dispositif de soufflage (32), sous l'influence du dispositif de commande (20), d'un flux d'air (36) depuis le dessus de la surface porteuse d'alimentation (14b) en direction de la surface porteuse d'alimentation (14b) à l'emplacement de la partie de positionnement (24), de sorte que les produits (2) sont forcés contre la surface porteuse d'alimentation (14b).

9. Procédé selon la revendication 8, dans lequel, lors de l'étape c), le flux d'air (36) est généré avec le dispositif de soufflage (32) avec une composante de vitesse d'air dans la direction d'alimentation (18) qui est au moins à peu près égale à une vitesse de déplacement des produits sur le transporteur (4).

10. Procédé selon la revendication 8 ou 9, dans lequel, aux fins de l'étape c), le dispositif de commande (20) commande le dispositif de soufflage (32) de telle manière que le dispositif de soufflage (32) ne génère le flux d'air (36) que pendant l'accélération et la décélération d'un produit (2), de préférence uniquement pendant l'accélération.
